# EUROPEAN PATENT SPECIFICATION

(11) **EP 2 808 455 B1**
(45) Date of publication and mention of the grant of the patent: **30.05.2018**
(21) Application number: 13740531.2
(22) Date of filing: 28.01.2013
(51) Int. Cl.: E02F 9/26, E02F 9/20, E02F 9/24

(54) **OPERATIONAL STABILITY ENHANCING DEVICE FOR CONSTRUCTION MACHINERY**
VORRICHTUNG ZUR ERHÖHUNG DER BETRIEBSSTABILITÄT EINER BAUMASCHINE
DISPOSITIF AMÉLIORANT LA STABILITÉ DE FONCTIONNEMENT D'ENGINS DE CHANTIER

(30) Priority: 27.01.2012 KR 20120008078; 30.01.2012 KR 20120008763; 17.12.2012 KR 20120147482; 10.01.2013 KR 20130002815
(43) Date of publication of application: 03.12.2014
(73) Proprietor: Doosan Infracore Co., Ltd., Dong-gu Incheon 401-020 (KR)
(72) Inventor: CHANG, Kyung Yul, Seoul 400-452 (KR)
(74) Representative: Isarpatent
(86) International application number: PCT/KR2013/000659
(87) International publication number: WO 2013/112016

(56) References cited:
- GB-A- 2 443 987
- JP-A- 2007 278 025
- JP-A- 2008 163 719
- JP-A- 2008 163 719
- JP-A- 2008 248 613
- JP-A- 2010 053 609
- JP-A- 2011 223 409
- KR-A- 20100 073 477
- US-A1- 2007 164 873

## Description

The present invention relates to an operational stability enhancing device for construction machinery

JP 2008 163 719 A discloses an operational stability enhancing device for construction machinery, comprising a plurality of cameras configured to capture surrounding images of construction machinery; a plurality of sensors configured to detect an obstacle located in a surrounding area of the construction machinery; a monitor configured to display the surrounding images of the construction machinery captured by the plurality of cameras; an electronic hydraulic pressure control valve configured to control an output flow rate of a corresponding hydraulic system driving unit so as to correspond to a manipulation signal of a user manipulation unit of the construction machinery; and a control unit configured to, in a case where a detected object is detected in a surrounding area of a moving path by the sensor, and the detected object is an avoidance processing target, display an image of the captured detected object on a monitor through screen conversion or change the image of the captured detected object when the construction machine approaches the detected object.

GB 2 443 987 A discloses a display device, which is carried on a working vehicle having a camera. The display device comprises a monitor screen, first display means for displaying information on the state of the working vehicle, in the monitor screen, second display means for displaying an image taken by the camera, in the monitor screen, first switching means for switching the screen information to be displayed in the monitor screen, abnormality detecting means for detecting an abnormality of the working vehicle, warning display means for displaying warning information in a portion of the monitor screen, operation detecting means for detecting whether or not the working vehicle is working, and second switching means for switching the screen information to be displayed in the monitor screen, automatically into the screen information by the first display means.

### [BACKGROUND OF THE DISCLOSURE]

In general, construction machinery, such as an excavator, is constructed such that a lower travelling body and an upper turning body are capable of freely turning. As described above, a case where the upper turning body turns with respect to the lower travelling body or the lower travelling body is reversed is generated while the construction machinery is operated, and in this case, there exists a blind spot which an operator operating the construction machinery in a driver's seat cannot visually see.

Accordingly, since the operator needs to operate the construction machinery while looking into a mirror provided in the upper turning body and the like of the construction machinery, or directly visually seeing a corresponding movement path, there is a problem in deterioration of working efficiency.

Accordingly, in order to solve the aforementioned problem, disclosed is an operational stability enhancing device which allows an obstacle located at a blind spot to be checked through an image captured by a camera by installing the camera at left and right sides or a rear side of an upper turning body.

That is, an around view monitoring (AVM) system, in which each camera is installed at a front side, left and right sides, and a rear side of a driver's cabin of construction machinery, and images of corresponding directions captured by the respective cameras are displayed on a screen, or synthesized into one image to be displayed, is applied to the operational stability enhancing device.

However, according to an image display device for construction machinery to which the AVM system in the related art is applied, a camera is installed only at a front side of a driver's cabin of the construction machinery, that is, a left-front side of the construction machinery, so that it is impossible to accurately recognize position information on an obstacle, such as electric wires and a telephone pole, present at an upper side of a right-front side, which is a blind spot hidden by a boom, a bucket, and the like, of the construction machinery, thereby causing a problem in that a negligence accident is generated when a boom is up or a turning body is turned to a right side.

Further, in the operational stability enhancing device for construction machinery in the related art, since only an image according to a movement route of construction machinery is simply displayed, there is a problem in that an operator needs to cumbersomely check each monitor, and further, since an operator needs to depend on a feeling about a distance from an obstacle checked through the monitor, there is a problem in that a negligence accident is generated in a case where the operator fails to accurately recognize information about a distance from the obstacle.

### [SUMMARY]

Accordingly, a first exemplary embodiment of the present invention is suggested to solve the aforementioned problems, and an object thereof is to provide an image display device for construction machinery, which may further capture an image for a right-front-upper side of a turning body, and then selectively display the image for the right-front-upper side together with an AVM screen region when a boom is up or the turning body turns to a right side, in construction machinery to which an AVM system is applied.

Another object thereof is to provide an operational stability enhancing device for construction machinery, which is capable of enhancing stability according to an operation state of the construction machinery by making the construction machinery be automatically controlled or moved in order to prevent the construction machinery from approaching a detected object during an operation in a case of an avoidance processing target.

However, an object of the present invention is not limited to the aforementioned objects, and those skilled in the art will clearly understand unmentioned other objects through the following description.

In order to achieve the above objects, according to the present invention, an operational stability enhancing device for construction machinery is provided, as defined in independent claim 1.

The device for enhancing operational stability for the construction machinery may further include a scanner configured to scan surrounding information of the construction machinery. The scanner may be installed at an upper portion of the construction machinery to 3D scan obstructions scattered in an irregular ground and a field environment.

The control unit may include: an image processor configured to process images captured by the scanner and the cameras; a graphic processor configured to process the processed images on a monitor as at least one of the respective images, a single image, or a selected image and display the processed image; a manipulation signal determiner configured to determine a current operation state of the construction machinery by receiving the manipulation signal of the construction machinery; an obstacle determiner configured to read from the camera the surrounding image of the moving path of the construction machinery when the manipulation signal determiner determines the operation state, compare the read image with the surrounding information obtained by the scanner, check whether the surrounding information is changed, and determine an existence of an obstacle;and a control signal generator configured to receive from the operator an input signal for determining whether the detected object is the operation target or the avoidance processing target when the obstacle is detected as a result of the determination of the obstacle determiner, and filter a current value of the manipulation signal, which disables the operation of the obstacle determiner when a signal for corresponding to the operation target is generated, and which makes the corresponding operation command be automatically delayed or stopped when the construction machinery approaches the detected object when a signal corresponding to the avoidance processing object is generated. The plurality of cameras may include a camera capturing a right-front-upper area of the construction machinery.

The control unit may make an image captured by the camera capturing the right-front-upper area be output on an entire region or at least a predetermined region of the monitor when a boom is up or a turning body turns.

The camera capturing the right-front-upper area may capture images for a right-front side of a turning body of the construction machinery, a right side having a predetermined angle with respect to the right-front side, and a 3D space at a right-upper side vertical to the right-front side and the right side.

According to the first exemplary embodiment of the present invention, in the construction machinery to which the AVM system is applied, the AVM screen region is displayed during a general operation, and a screen region of an upper end of the boom including a captured right-front-upper side of the turning body is selectively displayed when the boom is up or the turning body turns, thereby achieving a safety operation when the boom is up or the turning body turns to the right side in a state where the boom is up.

Further, according to the second exemplary embodiment of the present invention, in a case where the construction machinery moves to a place at which a surrounding geographical feature is changed in a state where the surrounding geographical feature of the construction machinery is scanned and monitored in a form of a top view based on the construction machinery, the present invention recognizes whether the detected object is the operation target or the avoidance processing target by sensing the detected object of the corresponding path, and stops the sensing operation when the detected object is the operation target, and makes the construction machinery be automatically controlled or move in order to prevent the construction machinery from approaching the detected object during the operation when the detected object is the avoidance processing target, thereby enhancing stability according to the operation state of the construction machinery.

However, an object of the present invention is not limited to the aforementioned matters, and those skilled in the art will clearly understand non-mentioned other objects through the following description.

### [DISCRIPTION OF THE DRAWINGS]

FIG. 1 is a configuration diagram schematically illustrating a configuration of an image display device for construction machinery according to a first exemplary embodiment of the present invention.
FIG. 2 is a diagram illustrating the construction machinery to which the image display device of FIG. 1 is applied.
FIG. 3 is a diagram illustrating a scope of an image captured by a right-front camera in the image display device for the construction machinery of FIG. 1.
FIG. 4 is a configuration diagram schematically illustrating a configuration of an operational stability enhancing device for construction machinery according to a second exemplary embodiment of the present invention.
FIG. 5 is a control flowchart illustrating a control method of construction machinery according to the operational stability enhancing device of FIG. 4.

### [DETAILED DESCRIPTION]

Hereinafter, an exemplary embodiment of the present invention will be described in detail with reference to the accompanying drawings.

### First exemplary embodiment

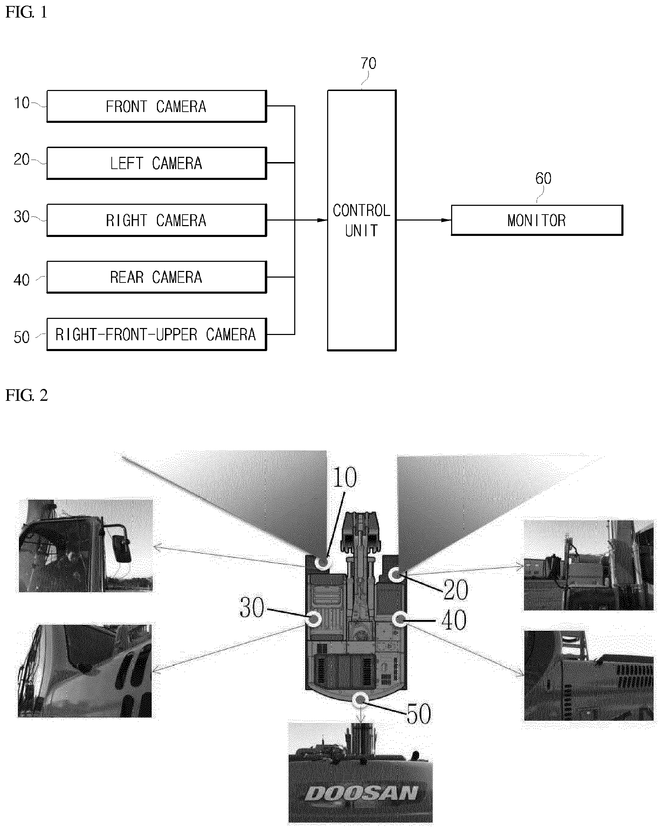

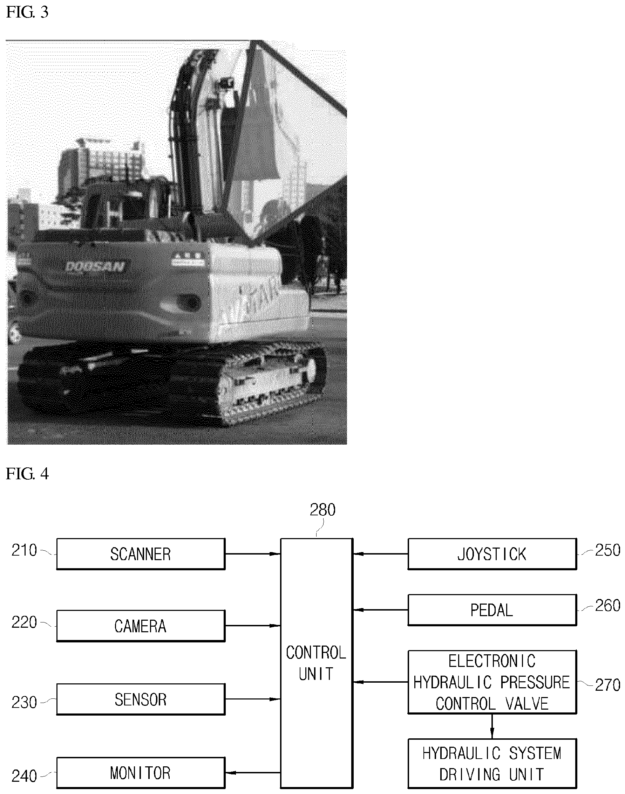

FIG. 1 is a configuration diagram schematically illustrating a configuration of an image display device for construction machinery according to a first exemplary embodiment of the present invention, FIG. 2 is a diagram illustrating the construction machinery to which the image display device of FIG. 1 is applied, and FIG. 3 is a diagram illustrating a scope of an image captured by a right-front camera side in the image display device for the construction machinery of FIG. 1.

As illustrated in FIGS. 1 to 3, the image display device for construction machinery according to the first exemplary embodiment of the present invention includes a front camera 10 positioned at a front side of a driver's cabin of the construction machinery, that is, a front side of the construction machinery, left and right cameras 20 and 30 positioned at left and right sides of the construction machinery, a front-front-upper camera 50 positioned at a right-front side of a turning body of the construction machinery to capture a right-front-upper area in a state where an AVM system, which displays an image for surrounding areas of the construction machinery in an AVM screen region through a rear camera 40 positioned at a rear side of the construction machinery is applied, a monitor 60 on which the image captured by each camera 10 to 50 is displayed in the AVM screen region and a screen region at a right-front-upper side, and a control unit 70 for processing the images captured by the cameras 10 to 50 to display the AVM screen region on the monitor 60 during a general operation, and display the right-front-upper side screen region on the monitor 60 when a boom is up or the turning body turns.

That is, in the image display device for the construction machinery according to the first exemplary embodiment of the present invention, the right-front-upper camera 50 is positioned at a right-front side of the turning body, to capture a predetermined space corresponding to the right-front-upper area of the turning body, so that it is possible to display the right-front-upper area hidden by the boom on a screen when the turning body turns to the right side or the boom is up.

Here, the front camera 10 of the AVM system may be positioned at a front side of the construction machinery to capture an image for a front area of the turning body. Further, the left and right cameras 20 and 30 may be positioned at a left side and a right side of the turning body of the construction machinery, respectively, to capture images for left/right-front sides based on left and right center areas of the turning body, and images for left/right-rear sides having predetermined angles with respect to the left/right-front sides. Further, the rear camera 40 may be positioned at a rear side of the turning body of the construction machinery to capture an image for a rear-left side based on a rear-center area of the turning body, and an image for a rear-right side having a predetermined angle with respect to the rear-left side.

Accordingly, in the image display device for the construction machinery, the front camera 10, the left and right cameras 20 and 30, and the rear camera 40 of the AVM system captures only an image for a three-dimensional space (lower space) from the turning body, in which the camera is positioned, to the ground, but the right-front-upper camera 50 may be positioned at the right-front area of the turning body, that is, a right side mirror of the turning body, and the like, and captures an image for a space corresponding to the right-front-upper area of the turning body.

Accordingly, according to the right-front-upper camera 50, in a state where the boom of the construction machinery is up to a high position, or in a case where the construction machinery turns to the right side, when a user cannot check the surroundings of a right-upper area of the boom due to the boom or a bucket, the right-front-upper camera 50 captures the image for the right-upper area of the boom to enable the user to check whether an obstacle, such as electric wires or a telephone pole, is positioned at the right-front-upper area of the turning body through the image when the boom is up or the turning body turns to the right side, thereby enabling the user to safely perform the turning of the turning body to the right side.

In the meantime, in the first exemplary embodiment of the present invention, a separate right-front-upper camera is further provided to capture an upper-front-upper side area, but when the boom is up or the turning body turns, a corresponding area may be captured by rotating some of the cameras of the AVM system.

The monitor 60 is provided inside the driver's cabin to display the images captured by the respective cameras 10 to 50 in the existing AVM screen region and the right-front-upper side screen region, and divides and displays the images according to the control of the control unit 70, or displays a combined screen region on the monitor 60 so that the right-front upper screen is positioned on a right region of the AVM screen region, or displays a corresponding image corresponding to a manipulation signal to a driver when the manipulation signal is generated from a joystick, which generates the manipulation signal for controlling an operation, such as forward travelling, backward travelling, the moving-up of the boom, and the turning, of the construction machinery.

Further, the monitor 60 may three-dimensionally display the images captured by the cameras or a surrounding image of the construction machinery from the outside according to the control of the control unit 70, and when an operation state of a constituent element of the construction machinery is changed, that is, the boom is up, an arm is dumped, or the turning body turns to the right side, the monitor 60 may automatically display the image captured by the right-front-upper camera 50 or continuously display the image captured by the right-front-upper camera 50 when the user manually selects the image.

The control unit 70 processes the images captured by the cameras 10 to 50 to display the AVM screen region on the monitor 60 during the general operation, and displays the right-front-upper side screen region on the monitor 60 when the boom is up or the turning body turns, and displays the corresponding image corresponding to the manipulation signal to the driver when the manipulation signal is generated from the joystick, which generates the manipulation signal for controlling the operation, such as forward travelling, backward travelling, the moving-up of the boom, and the turning, of the construction machinery, and includes an image processor for processing the images captured by the respective cameras to process the captured images to be displayed in to the AVM screen region, the right-front-upper side screen region, and the combined screen region in which the right-front-upper side screen is positioned in the right region of the AVM screen region, a distance calculator calculating an actual distance for the image processed by the image processor, or an actual area for the image, an information synthesizer for overlapping distance information and the image based on the information of the image processor and the distance calculator, a display unit for processing image information generated by the information synthesizer according to a predetermined image display algorithm to process and display the processed image information to the respective screen region on the monitor 60, and a manipulation signal determiner for determining a current operation state of the construction machinery by receiving the manipulation signals of the constituent elements of the construction machinery.

Here, the distance calculator calculates an actual distance to a corresponding obstacle in the captured image in a top view state by using capturing angle information, such as a focus distance, a mounting height, a vertical wide angle, and a pitch angle, and displays the calculated actual distance with dots at a predetermined interval or a number, thereby enabling the user to recognize a distance to the obstacle. That is, it is possible to calculate a distance of a corresponding image even without using a separate sensing member using ultrasonic waves, infrared rays, or laser, which detects an obstacle and calculates the distance to the obstacle.

Further, the image display algorithm may make each of the images captured by the cameras to be processed be displayed on the monitor 60, or make only an image corresponding to a corresponding operation be displayed on the monitor 60 by determining a current operation of the construction machinery by the manipulation signal determiner.

That is, for example, in a case where the image captured by each of the cameras is processed on the monitor 60 by the aforementioned processing method, and the manipulation signal determiner determines that the boom of the construction machinery is currently in an up state or the turning body is to turn to the right side in a state where the AVM screen region is displayed during the general operation, the right-front-upper side screen region captured by the right-front-upper camera 50 is separately displayed, or the combined screen region, in which the right-front-upper side screen is positioned in the right region of the AVM screen region, is displayed on the monitor 60, so that it is possible to enable the user to recognize whether an obstacle located at a corresponding space exists through the captured image for the right-front-upper area, and further, enable the user to further recognize information about an available range within which the boom is up, a distance to the obstacle, and the like.

Hereinafter, an operation and an effect of the image display device for the construction machinery according to the first exemplary embodiment of the present invention will be described.

In the image display device for the construction machinery according to the first exemplary embodiment of the present invention, the images, which are captured by the front camera 10 positioned in the driver's cabin of the construction machinery, the left and right cameras 20 and 30 positioned at the left and right sides of the construction machinery, the rear camera 40 positioned at the rear side of the construction machinery, and the right-front-upper camera 50 positioned at the right-front side of the turning body of the construction machinery, are processed by the control unit 70.

In this state, the control unit 70 determines a current operation state of the construction machinery through the manipulation signals of the constituent elements of the construction machinery, and may make the AVM screen region be displayed during the general operation of the construction machinery, and for example, in a case where the construction machinery travels, the captured image of the front camera 10 is displayed on the monitor 60 through screen conversion while the construction machinery travels forward, and the captured image of the left camera 20 is displayed on the monitor 60 through screen conversion while the construction machinery swings to the left direction.

In the meantime, in a case where it is determined that the construction machinery is in a state where the boom is currently up or the turning body plans to turn to the right side as a determination result through the manipulation signals of the constituent elements of the construction machinery, the control unit 70 makes the image captured by the right-front-upper camera 50 be displayed on the monitor 60, and in this case, information about the image captured by the right-front-upper camera 50 and displayed on the monitor 60 through screen conversion may be displayed in the combined screen region in which the right-front-upper side screen region is separately displayed from the AVM screen region, or the right-front-upper side screen region is positioned at a right portion of the AVM screen region.

In this case, the distance information within the image is also displayed in the image of the corresponding screen region, so that the user may further recognize the information, such as the available range within which the boom is up, and the distance to the obstacle, together with the existence of the obstacle located at the corresponding space of the right-front-upper area, thereby preventing a negligence accident.

Accordingly, according to the image display device for the construction machinery to which the AVM system is applied, the AVM screen region is displayed during the general operation, and the image for the right-front-upper side is selectively displayed together with the AVM screen region when the boom is up or the turning body turns to the right side, thereby enabling the user to recognize the blind spot, which is hidden by the boom, through the screen when the boom is up or the turning body turns to the right side to perform a safe operation.

### Second exemplary embodiment

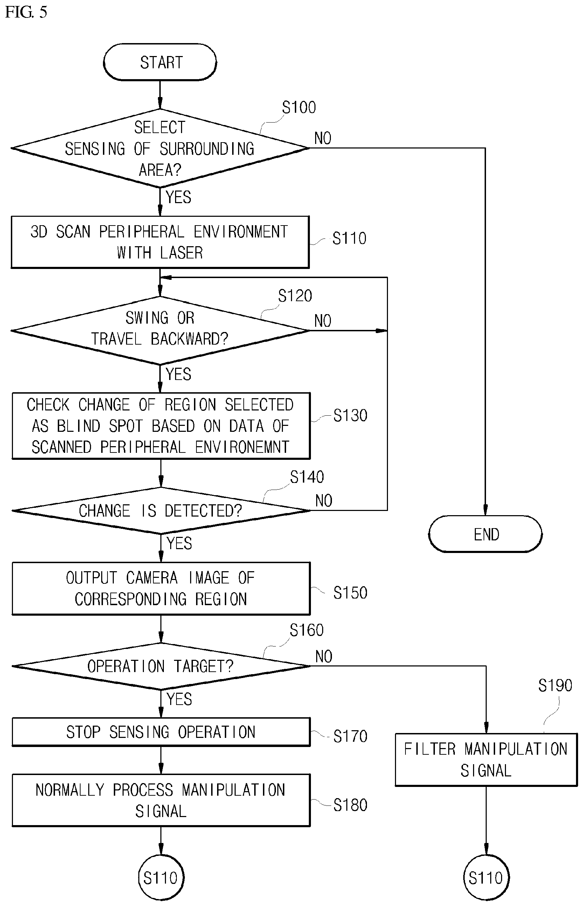

FIG. 4 is a configuration diagram schematically illustrating a configuration of an operational stability enhancing device for construction machinery according to a second exemplary embodiment of the present invention, and FIG. 5 is a control flowchart illustrating a control method of construction machinery according to the operational stability enhancing device of FIG. 4.

As illustrated in FIGS. 4 and 5, the operational stability enhancing device for construction machinery according to the exemplary embodiment of the present invention includes a scanner 210 installed at an upper side of the construction machinery and configured to three-dimensionally scan obstructions scattered in an irregular ground and a field environment, a plurality of cameras 220 provided at a front side, left and right side, a rear side, and the like of the construction machinery and configured to capture the surrounding area of the construction machinery, a plurality of sensors 230 provided at the front side, the left and right side, the rear side, and the like of the construction machinery and configured to detect an obstacle located in the surrounding area of the construction machinery, a monitor 240 configured to display surrounding information of the construction machinery scanned by the scanner 210 in a form of a top view, and displaying surrounding images of the construction machinery captured by the plurality of cameras 220, a joystick 250 and a pedal 260 configured to generate manipulation signals of a lower travelling body and an upper travelling body, and a working device performing excavation or other operation of the construction machinery, an electronic hydraulic pressure control valve 270 configured to control an output flow rate of a hydraulic system driving unit, such as a corresponding hydraulic pump and cylinder, so as to correspond to the manipulation signal of the joystick 250 and the pedal 260, and a control unit 280 electrically connected to each of the constituent elements to, when the manipulation signals of the joystick 250 and the pedal 260 are generated in a state where surrounding information obtained by the scanner 210 and surrounding information obtained by the cameras 220 are displayed on the monitor 240, that is, a travelling or turning command of the construction machinery is generated, in a case where an image for surrounding areas of a moving path corresponding to a corresponding operation command is changed or a detected object is detected in the surrounding area of the moving path by the corresponding sensor 230, recognize an operator the change in the surrounding image of the moving path or the detection of the detected object, and then stop an operation of the sensor 230 in a case where the detected object is an operation target by receiving a selection signal for determining whether the detected object is the operation target or an avoidance processing target from a separate input device, and delay or stop the corresponding operation command by automatically controlling the electronic hydraulic pressure control valve 270 when the construction machinery approaches the detected object in a case where the detected object is the avoidance processing target.

The scanner 210 is installed at the upper side of the construction machinery to 3D scan obstructions scattered in the irregular ground and the field environment, and may be formed of a laser scanning device.

Here, since the a 3D modeling system of reading the obstructions scattered in the irregular ground and the field environment through the aforementioned laser scanning device is an already publicly known technology, a detailed description will be omitted.

The plurality of cameras 220 may be formed of a left-front camera positioned at a front side of a driver's cabin of the construction machinery, that is, the left-front side of the construction machinery, left and right cameras positioned at left and right sides of the construction machinery, a rear camera positioned at a rear side of the construction machinery, and a right-front camera positioned at a right-front side of the turning body, not the driver's cabin, of the construction machinery, and the respective cameras may capture an image for a three-dimensional space from the turning body at which the camera is positioned to the ground and an upper side of the turning body.

Accordingly, the camera 220 captures a blind spot corresponding to the moving path of the construction machinery, thereby enabling the operator to check whether the obstacle exists while observing the monitor 240 in a state where the construction machinery travels or turns, or the boom is up.

The plurality of sensors 230 is provided at the front side, the left and right sides, the rear side, and the like of the construction machinery to detect the obstacle located in the surrounding area of the construction machinery, and may be a sensing member using infrared rays, ultrasonic waves, and the like, and in a case where the obstacle is located within a predetermined range of the moving path of the construction machinery, the plurality of sensors 230 enables the operator to recognize whether the obstacle exists through a buzzer, and the like.

The monitor 240 is provided inside the driver's cabin to display information about the surroundings of the construction machinery scanned by the scanner 210 in the form of a top view, and display the surrounding images of the construction machinery captured by the plurality of cameras 220, and may divide and display the respective images or display one synthesized image according to the control of the control unit 280.

The joystick 250 and the pedal 260 generate the manipulation signals of the lower travelling body and the upper travelling body, or the working device performing excavation or other operation of the construction machinery, and the electronic hydraulic pressure control valve 270 enables the construction machinery to perform a corresponding operation by controlling an output flow rate of the hydraulic pump and the cylinder according to the manipulation signal. Here, the control by the electronic hydraulic pressure control valve 270 according to the manipulation signal of the joystick 250 and the pedal 260 may be performed by an electronic control method, which is a publicly known technology, and thus a detailed description thereof will be omitted.

The control unit 280 is electrically connected to the constituent elements to perform the control of the construction machinery having stability when the manipulation signal is generated, and includes an image processor for processing the images captured by the scanner 210 and the cameras 220, a display unit for processing an image processed by the image processor according to a predetermined image display algorithm and processing and displaying the processed images on the monitor 240 as at least one of the respective images, a single image, or a selected image, a manipulation signal determiner for determining a current operation state of the construction machinery by receiving the manipulation signals of the constituent elements of the construction machinery, an obstacle determiner for reading from the camera 220 the surrounding image of the moving path of the construction machinery when the manipulation signal determiner determines the operation state, comparing the read image with the surrounding information obtained by the scanner 210, and determining that the obstacle exists in a case where the surrounding information is changed or the obstacle is detected in the surrounding area of the moving path based on a signal indicating whether the obstacle is detected, which is generated from the plurality of sensors 230, and a control signal generator for making the operator recognize the detection of the obstacle when the obstacle is detected as a result of the determination of the obstacle determiner, and receiving a signal input through an input device, that is, an input signal for determining whether the detected object (or the obstacle) is the operation target or the avoidance processing target, from the operator, and filtering a current value of the manipulation signal, which stops the operation of the sensor 230 when the signal for the operation target is generated, and which delays or stops the corresponding operation command by automatically controlling the electronic hydraulic pressure control valve 270 when the construction machines approaches the detected object when a signal for the avoidance processing object is generated.

Hereinafter, an operation and an effect of the operational stability enhancing device for the construction machinery according to the exemplary embodiment of the present invention will be described.

In the operational stability enhancing device for the construction machinery according to the exemplary embodiment of the present invention, first, when a selection signal corresponding to a sensing operation for surrounding information of the construction machinery using the scanner 210 is generated through a separate switch provided in the driver's cabin of the construction machinery or an input button on the monitor 240 (S100), the control unit 280 controls the operation of the scanner 210 to 3D scan obstructions scattered in an irregular ground and a field environment of the surrounding area of the construction machinery and then displays the 3D-scanned obstructions in a top view on the monitor (S110).

Here, the control unit 280 displays on the monitor 240 the respective surrounding images of the construction machinery captured by the plurality of cameras 220 after driving the construction machinery.

Then, the control unit 280 determines whether the manipulation signal for travelling or turning of the construction machinery is generated from the joystick 250, the pedal 260, and the like (S120).

When the manipulation signal is generated from the joystick 250, the pedal 260, and the like as a result of the determination of step S120, particularly, when the manipulation signal corresponding to the travelling backward or the turning of the construction machinery is generated, the control unit 280 compares the surrounding information scanned by the scanner 210 and an image for surrounding areas captured by a corresponding camera capturing a blind spot corresponding to the moving path of the construction machinery according to the manipulation signal so as to check whether data is changed (S130).

Then, when it is checked in step S130 that the image of the blind spot corresponding to the moving path of the construction machinery and the surrounding information scanned by the scanner 210 are changed (S140), the control unit 280 displays the surrounding image of the corresponding blind spot on the monitor 240, and make the operator recognize the change (S150).

That is, in a case where the obstacle and the like, which has not been initially scanned, exists in a direction in which the construction machinery plans to move, the control unit 280 makes the operator recognize the existence of the obstacle through the monitor, a buzzer, and the like, thereby preventing an occurrence of a negligence accident in a case where the operator does not determine whether the obstacle exists and performs the control of the construction machinery.

Then, the control unit 280 receives an input signal for determining whether the obstacle is the operation target or the avoidance processing target through a separate input device from the operator, and when the obstacle is the operation target (S160), the control unit 280 disables the obstacle sensing operation (S170), and then normally processes the manipulation signal to normally perform the operation on the obstacle (S180).

When the obstacle is the avoidance processing target in step S160, the control unit 280 continuously determines whether the construction machinery approaches the obstacle, and when it is expected that the construction machinery collides with the obstacle, the control unit 280 filters an output value corresponding to the manipulation signal and outputs the filtered output value to the electronic hydraulic pressure control valve 270, thereby preventing the obstacle and the construction machinery from colliding with each other (S190).

According to the above description, in a case where the construction machinery moves to a place at which a surrounding geographical feature is changed in a state where the surrounding geographical feature of the construction machinery is scanned and monitored in a form of a top view based on the construction machinery, the present invention recognizes whether the detected object is the operation target or the avoidance processing target by sensing the detected object of the corresponding path, and stops the sensing operation when the detected object is the operation target, and makes the construction machinery be automatically controlled or moved in order to prevent the construction machinery from approaching the detected object during the operation when the detected object is the avoidance processing target, thereby enhancing stability according to the operation state of the construction machinery.

The aforementioned first exemplary embodiment and second exemplary embodiment may be combined with each other. In the combination thereof, the constituent elements of the first exemplary embodiment and the constituent elements of the second exemplary embodiment are not all essentially required, and some of the constituent elements may be omitted.

## Claims

1. An operational stability enhancing device for construction machinery, comprising:
a plurality of cameras (10, 20, 30, 40, 50; 220) configured to capture surrounding images of construction machinery;
a plurality of sensors (230) configured to detect an obstacle located in a surrounding area of the construction machinery;
a monitor (60; 240) configured to display the surrounding images of the construction machinery captured by the plurality of cameras (10, 20, 30, 40, 50; 220);
an electronic hydraulic pressure control valve (270) configured to control an output flow rate of a corresponding hydraulic system driving unit so as to correspond to a manipulation signal of a user manipulation unit (250) of the construction machinery;
a manipulation signal determiner configured to determine a current operation state of the construction machinery by receiving the manipulation signal of the construction machinery;
an obstacle determiner configured to read from the camera the surrounding image of the moving path of the construction machinery when the manipulation signal determiner determines the operation state, compare the read image with the surrounding information obtained by the scanner, check whether the surrounding information is changed, and determine an existence of the obstacle; and
a control signal generator configured to, in a case where a detected object is detected in a surrounding area of a moving path by the sensor, receive from the operator an input signal for determining whether the detected object is the operation target or the avoidance processing target when the obstacle is detected as a result of the determination of the obstacle determiner, and filter a current value of the manipulation signal, which disables the operation of the obstacle determiner when a signal corresponding to the operation target is generated, and which causes the corresponding operation command to be automatically delayed or stopped when the construction machines approaches the detected object when a signal corresponding to the avoidance processing object is generated; and
a control unit (70; 280) configured to in a case where the detected object is an avoidance processing target, display an image of the captured detected object on a monitor through screen conversion or change the image of the captured detected object when the construction machines approaches the detected object.

2. The operational stability enhancing device of claim 1, wherein in a case where the detected object is an avoidance processing target, the control unit delays or stops an operation command for the manipulation signal by automatically controlling the electronic hydraulic pressure control valve (270) when the construction machinery approaches the detected object.

3. The operational stability enhancing device of claim 1, further comprising:
a scanner (210) configured to scan surrounding information of the construction machinery.

4. The operational stability enhancing device of claim 3, wherein the scanner (210) is installed at an upper side of the construction machinery to 3D scan obstructions scattered in an irregular ground and a field environment.

5. The operational stability enhancing device of claim 3, wherein the control unit (70; 280) includes:
an image processor configured to process images captured by the scanner and the cameras; and
a graphic processor configured to process the processed images on a monitor as at least one of the respective images, a single image, or a selected image and display the processed image.

6. The operational stability enhancing device of claim 1, wherein the plurality of cameras (10, 20, 30, 40, 50; 220) includes a camera (50) capturing a right-front-upper area of the construction machinery,
wherein right-front-upper area of the construction machinery is hidden by the boom, when the boom is up or the turning body turns to the right side.

7. The operational stability enhancing device of claim 6, when the manipulation signal determiner determines that the boom of the construction machinery is currently in an up state or the turning body is to turn to the right side in a state, the control unit makes an image captured by the camera capturing the right-front-upper area be output on an entire region or at least a predetermined region of the monitor (60; 240) when a boom is up or a turning body turns.

8. The operational stability enhancing device of claim 6, wherein the camera (50) capturing the right-front-upper area captures images for a right-front side of the turning body of the construction machinery, a right side having a predetermined angle with respect to the right-front side, and a 3D space at a right-upper side vertical to the right-front side and the right side.

9. The operational stability enhancing device of claim 1, wherein the image of the captured detected object is changed by selecting at least one of a method of making the corresponding image flicker, a method of displaying a screen image with a different color, and a method of displaying the corresponding image on the entire monitor or displaying the corresponding image at a center portion of the monitor in a pop-up form in a case where the corresponding image is displayed on one screen among the plurality of screens.

## Patentansprüche

1. Betriebsstabilitätsverbesserungsvorrichtung für Baumaschinen, umfassend:
mehrere Kameras (10, 20, 30, 40, 50; 220), die dafür ausgestaltet sind, Bilder aus der Umgebung einer Baumaschine aufzunehmen;
mehrere Sensoren (230), die dafür ausgestaltet sind, ein Hindernis zu detektieren, das sich in einem Umgebungsbereich der Baumaschinen befindet;
einen Monitor (60; 240), der dafür ausgestaltet ist, die durch die mehreren Kameras (10, 20, 30, 40, 50; 220) aufgenommenen Bilder aus der Umgebung der Baumaschine anzuzeigen;
ein elektronisches Hydraulikdrucksteuerventil (270), das dafür ausgestaltet ist, eine Ausgabeströmungsrate einer entsprechenden Hydrauliksystem-Antriebseinheit so zu steuern, dass sie einem Bediensignal einer Benutzerbedieneinheit (250) der Baumaschine entspricht;
eine Bediensignalbestimmungsvorrichtung, die dafür ausgestaltet ist, einen momentanen Betriebszustand der Baumaschine durch Empfangen des Bediensignals der Baumaschine zu bestimmen;
eine Hindernisbestimmungsvorrichtung, die dafür ausgestaltet ist, aus der Kamera das Umgebungsbild des Bewegungspfades der Baumaschine zu lesen, wenn die Bediensignalbestimmungsvorrichtung den Betriebszustand bestimmt, Vergleichen des gelesenen Bildes mit den durch den Scanner gewonnenen Umgebungsinformationen, Überprüfen, ob die Umgebungsinformationen sich ändern, und Bestimmen des Vorhandenseins des Hindernisses; und
einen Steuersignalgenerator, der dafür ausgestaltet ist, für den Fall, dass ein detektiertes Objekt in einem Umgebungsbereich eines Bewegungspfades durch den Sensor detektiert wird, von dem Bediener ein Eingangssignal zu empfangen, um zu bestimmen, ob das detektierte Objekt das Betriebsziel oder das Vermeidungsverarbeitungsziel ist, wenn das Hindernis im Ergebnis der Bestimmung der Hindernisbestimmungsvorrichtung detektiert wird, und einen momentanen Wert des Bediensignals zu filtern, wodurch der Betrieb der Hindernisbestimmungsvorrichtung deaktiviert wird, wenn ein Signal, das dem Betriebsziel entspricht, generiert wird, und wodurch der entsprechende Betriebsbefehl automatisch verzögert oder gestoppt wird, wenn sich die Baumaschine dem detektierten Objekt nähert, wenn ein Signal, das dem Vermeidungsverarbeitungsobjekt entspricht, generiert wird; und
eine Steuereinheit (70; 280), die dafür ausgestaltet ist, für den Fall, dass das detektierte Objekt ein Vermeidungsverarbeitungsziel ist, ein Bild des aufgenommenen detektierten Objekts auf einem Monitor durch Bildschirmumwandlung anzuzeigen oder das Bild des aufgenommenen detektierten Objekts zu ändern, wenn sich die Baumaschine dem detektierten Objekt nähert.

2. Betriebsstabilitätsverbesserungsvorrichtung nach Anspruch 1, wobei für den Fall, dass das detektierte Objekt ein Vermeidungsverarbeitungsziel ist, die Steuereinheit einen Betriebsbefehl für das Bediensignal durch automatisches Steuern des elektronischen Hydraulikdrucksteuerventils (270) verzögert oder stoppt, wenn sich die Baumaschine dem detektierten Objekt nähert.

3. Betriebsstabilitätsverbesserungsvorrichtung nach Anspruch 1, des Weiteren Folgendes ummfassend:
einen Scanner (210), der dafür ausgestaltet ist, Umgebungsinformationen der Baumaschine zu scannen.

4. Betriebsstabilitätsverbesserungsvorrichtung nach Anspruch 3, wobei der Scanner (210) auf einer Oberseite der Baumaschine installiert ist, um einen 3D-Scan von Hindernissen vorzunehmen, die auf einem unebenen Gelände und in einer Feldumgebung verteilt sind.

5. Betriebsstabilitätsverbesserungsvorrichtung nach Anspruch 3, wobei die Steuereinheit (70; 280) Folgendes umfasst:
einen Bildprozessor, der dafür ausgestaltet ist, Bilder zu verarbeiten, die durch den Scanner und die Kameras aufgenommen wurden; und
einen Grafikprozessor, der dafür ausgestaltet ist, die verarbeiteten Bilder auf einen Monitor als mindestens eines der jeweiligen Bilder, ein einzelnes Bild oder ein ausgewähltes Bild zu verarbeiten und das verarbeitete Bild anzuzeigen.

6. Betriebsstabilitätsverbesserungsvorrichtung nach Anspruch 1, wobei die mehreren Kameras (10, 20, 30, 40, 50; 220) eine Kamera (50) umfassen, die einen rechten vorderen oberen Bereich der Baumaschine aufnimmt,
wobei der rechte vordere obere Bereich der Baumaschine durch den Ausleger verdeckt wird, wenn der Ausleger angehoben ist oder der Drehkörper sich nach rechts dreht.

7. Betriebsstabilitätsverbesserungsvorrichtung nach Anspruch 6, wobei, wenn die Bediensignalbestimmungsvorrichtung bestimmt, dass sich der Ausleger der Baumaschine momentan in einem angehobenen Zustand befindet oder der Drehkörper nach rechts in einen Zustand gedreht werden soll, die Steuereinheit veranlasst, dass ein Bild, das durch die Kamera aufgenommen wurde, die den rechten vorderen oberen Bereich aufnimmt, auf einer gesamten Region oder mindestens einer zuvor festgelegten Region des Monitors (60; 240) angezeigt wird, wenn ein Ausleger angehoben ist oder ein Drehkörper sich dreht.

8. Betriebsstabilitätsverbesserungsvorrichtung nach Anspruch 6, wobei die Kamera (50), die den rechten vorderen oberen Bereich aufnimmt, Bilder für eine rechte vordere Seite des Drehkörpers der Baumaschine aufnimmt, wobei eine rechte Seite einen zuvor festgelegten Winkel mit Bezug auf die rechte vordere Seite und einen 3D-Raum auf einer rechten oberen Seite vertikal zu der rechten vorderen Seite und der rechten Seite aufweist.

9. Betriebsstabilitätsverbesserungsvorrichtung nach Anspruch 1, wobei das Bild des aufgenommenen detektierten Objekts geändert wird, indem mindestens eines von Folgendem ausgewählt wird: ein Verfahren, bei dem das entsprechende Bild zum Flackern gebracht wird, ein Verfahren, bei dem ein Bildschirmbild mit einer anderen Farbe angezeigt wird, und ein Verfahren, bei dem das entsprechende Bild auf dem gesamten Monitor angezeigt wird oder das entsprechende Bild in einem mittigen Abschnitt des Monitors in plötzlich eingeblendeter Form (Pop-up) angezeigt wird, falls das entsprechende Bild auf einem einzelnen Bildschirm unter den mehreren Bildschirmen angezeigt wird.

## Revendications

1. Dispositif d'amélioration de la stabilité de fonctionnement d'un engin de construction, comprenant :
une pluralité de caméras (10, 20, 30, 40, 50 ; 220) conçues pour capturer des images environnantes d'engin de construction ;
une pluralité de capteurs (230) conçus pour détecter un obstacle situé dans une zone environnante de l'engin de construction ;
un moniteur (60 ; 240) conçu pour afficher les images environnantes de l'engin de construction, capturées par la pluralité de caméras (10, 20, 30, 40, 50 ; 220) ;
une vanne de régulation électronique de pression hydraulique (270) conçue pour réguler un débit de sortie d'une unité d'entraînement de système hydraulique correspondant, de manière à le faire correspondre à un signal de manipulation d'une unité de manipulation par utilisateur (250) de l'engin de construction ;
un dispositif de détermination de signaux de manipulation, conçu pour déterminer un état de fonctionnement actuel de l'engin de construction, en recevant le signal de manipulation de l'engin de construction ;
un dispositif de détermination d'obstacles, conçu pour lire, à partir de la caméra, l'image environnante du trajet de déplacement de l'engin de construction, lorsque le dispositif de détermination de signaux de manipulation détermine l'état de fonctionnement, comparer l'image lue aux informations d'environnement obtenues par le numériseur, vérifier si les informations d'environnement ont changé, et déterminer l'existence de l'obstacle ; et
un générateur de signaux de commande conçu, dans le cas où un objet détecté est détecté dans une zone environnante d'un trajet de déplacement par le capteur, pour recevoir de l'opérateur un signal d'entrée pour déterminer si l'objet détecté est la cible de fonctionnement ou la cible de traitement d'évitement lorsque l'obstacle est détecté, du fait de la détermination du dispositif de détermination d'obstacles, et filtrer une valeur actuelle du signal de manipulation, ce qui désactive le fonctionnement du dispositif de détermination d'obstacles lorsqu'un signal correspondant à la cible de fonctionnement est produit, et ce qui a pour effet de retarder ou
d'arrêter automatiquement l'instruction de fonctionnement correspondante, lorsque l'engin de construction se rapproche de l'objet détecté, quand un signal correspondant à l'objet de traitement d'évitement est produit ; et
une unité de commande (70 ; 280) conçue, dans le cas où l'objet détecté est une cible de traitement d'évitement, pour afficher une image de l'objet détecté capturé sur un moniteur par conversion d'écran ou pour modifier l'image de l'objet détecté capturé lorsque l'engin de construction se rapproche de l'objet détecté.

2. Dispositif d'amélioration de stabilité de fonctionnement selon la revendication 1, dans lequel, dans le cas où l'objet détecté est une cible de traitement d'évitement, l'unité de commande retarde ou arrête une instruction de fonctionnement correspondant au signal de manipulation, en commandant automatiquement la vanne de régulation électronique de pression hydraulique (270), lorsque l'engin de construction de se rapproche de l'objet détecté.

3. Dispositif d'amélioration de stabilité de fonctionnement selon la revendication 1, comprenant en outre :
un numériseur (210) conçu pour numériser des informations d'environnement de l'engin de construction.

4. Dispositif d'amélioration de stabilité de fonctionnement selon la revendication 3, dans lequel le numériseur (210) est installé d'un côté supérieur de l'engin de construction pour numériser en 3 dimensions des entraves dispersées sur un sol irrégulier et un environnement de terrain.

5. Dispositif d'amélioration de stabilité de fonctionnement selon la revendication 3, dans lequel l'unité de commande (70 ; 280) comporte :
un processeur d'images conçu pour traiter des images capturées par le numériseur et les caméras ; et
un processeur graphique conçu pour traiter les images traitées sur un moniteur, en tant que l'une au moins des images respectives, une image unique ou une image sélectionnée, et pour afficher l'image traitée.

6. Dispositif d'amélioration de stabilité de fonctionnement selon la revendication 1, dans lequel la pluralité de caméras (10, 20, 30, 40, 50 ; 220) inclut une caméra (50) capturant une zone supérieure avant droite de l'engin de construction,
dans lequel la zone supérieure avant droite de l'engin de construction est cachée par la flèche, lorsque la flèche est levée ou que le corps rotatif tourne vers la droite.

7. Dispositif d'amélioration de stabilité de fonctionnement selon la revendication 6, dans lequel, lorsque le dispositif de détermination de signaux de manipulation détermine que la flèche de l'engin de construction est actuellement à l'état levé ou que le corps rotatif doit tourner vers la droite, dans un état, l'unité de commande fait qu'une image capturée par la caméra capturant la zone supérieure avant droite soit délivrée sur une région entière ou au moins sur une région prédéterminée du moniteur (60 ; 240) lorsqu'une flèche est levée ou qu'un corps rotatif tourne.

8. Dispositif d'amélioration de stabilité de fonctionnement selon la revendication 6, dans lequel la caméra (50) capturant la zone supérieure avant droite capture des images correspondant à un côté avant droit du corps rotatif de l'engin de construction, un côté droit formant un angle prédéterminé par rapport au côté avant droit, et un espace tridimensionnel d'un côté supérieur droit vertical par rapport au côté avant droit et au côté droit.

9. Dispositif d'amélioration de stabilité de fonctionnement selon la revendication 1, dans lequel l'image de l'objet détecté capturé est modifiée par sélection d'au moins un procédé parmi un procédé consistant à faire papilloter l'image correspondante, un procédé consistant à afficher une image d'écran dans une couleur différente, et un procédé consistant à afficher l'image correspondante sur le moniteur entier ou à afficher l'image correspondante en une partie centrale du moniteur sous la forme d'une fenêtre intruse, dans le cas où l'image correspondante est affichée sur un écran parmi la pluralité d'écrans.
